# FASCICULE DE BREVET EUROPEEN

(11) **EP 1 961 609 B1**
(45) Date de publication et mention de la délivrance du brevet: **14.08.2013**
(21) Numéro de dépôt: 08290107.5
(22) Date de dépôt: 06.02.2008
(51) Int. Cl.: B60N 2/48

(54) **Ensemble de réception en coulissement d'une tige crantée de montage d'un appui-tête comprenant un moyen d'absorption d'énergie**
Verschiebbare Aufnahmeeinheit einer Zahnstange zur Befestigung einer Kopfstütze, die ein Mittel zur Energieabsorption umfasst
Assembly for accommodating and sliding a notched rod for installing a headrest comprising energy absorbing means

(30) Priorité: 20.02.2007 FR 0701209
(43) Date de publication de la demande: 27.08.2008
(73) Titulaire: Centre d'Etude et de Recherche pour l'Automobile (CERA), 51100 Reims (FR)
(72) Inventeur: DeHondt, Thierry, 51430 Tinqueux (FR); Dauchez, Fernand, 02400 Bezu Saint Germain (FR)
(74) Mandataire: Sayettat, Julien Christian

(56) Documents cités:
- EP-A- 0 953 476
- FR-A1- 2 763 293
- FR-A1- 2 786 141

## Description

L'invention concerne un ensemble de réception en coulissement d'une tige crantée de montage d'un appui-tête de siège de véhicule automobile et un siège comprenant un tel ensemble.

L'état de la technique le plus proche est divulgué dans le document FR 2 786 141.

Il est connu de réaliser un ensemble de réception en coulissement d'une tige crantée de montage d'un appui-tête de siège de véhicule automobile, ledit ensemble comprenant ladite tige, une gaine et un moyen d'association de ladite gaine sur un support, ladite gaine comprenant un dispositif de blocage, disposé dans un logement prévu dans ladite gaine, susceptible de coopérer, par une zone d'engagement, avec un cran de ladite tige pour la bloquer en coulissement.

Un tel agencement peut permettre notamment un réglage de la position verticale de l'appui-tête, ceci en fonction de la taille de l'occupant du siège.

En cas de collision du véhicule, la tête du passager heurtant l'appui-tête peut générer un effort vers le bas sur l'appui-tête.

A l'inverse, l'appui-tête peut, en cas de décélération brutale et du fait de son poids, subir un effort exercé vers le haut, la tige risquant de sortir de la gaine, ce qui entraîne un risque de projection de l'appui-tête dans l'habitacle du véhicule. Il devient alors un projectile dangereux et en outre n'assure plus sa fonction de maintien de la tête du passager.

Pour éviter ces risques, on réalise des crans de profondeur importante, permettant d'assurer une bonne coopération du dispositif de blocage avec eux.

Pour des raisons de baisse de poids et d'économie de matière, on cherche à réduire la section des tiges de montage des appuis-tête.

Mais, la présence de crans de grande profondeur induit alors une fragilisation de la tige, qui présente donc une résistance en flexion insuffisante en cas de projection de la tête du passager sur l'appui-tête.

Notamment avec des tiges de section réduite, on est donc amené à limiter la profondeur des crans, ce qui fragilise la coopération du dispositif de blocage avec le cran.

L'invention a pour but de concilier, sur des tiges de moindre section, les exigences de résistance en flexion et de blocage en coulissement.

A cet effet, et selon un premier aspect, l'invention propose un ensemble selon la revendication 1.

Ainsi, l'invention permet de réaliser des crans de moindre profondeur, propres à assurer un maintien de la position de réglage de l'appui-tête et, lorsqu'un effort seuil est atteint, de réaliser une absorption d'énergie par le moyen d'absorption, la coopération entre le dispositif de blocage et le cran en cas de collision du véhicule étant alors maintenue.

Selon un deuxième aspect, l'invention propose un siège de véhicule automobile comprenant un tel ensemble.

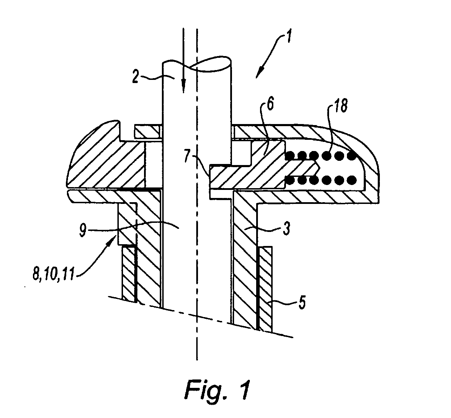

D'autres particularités et avantages de l'invention apparaîtront dans la description qui suit, faite en référence
- à la figure 1 qui est une représentation en coupe partielle d'un ensemble selon un mode de réalisation, une tige crantée étant disposée dans la gaine, le dispositif de blocage coopérant avec un cran de ladite tige pour la bloquer en coulissement, en l'absence d'application d'un effort seuil selon l'axe de coulissement.

On décrit un ensemble 1 de réception en coulissement d'une tige 2 crantée de montage d'un appui-tête de siège de véhicule automobile, ledit ensemble comprenant ladite tige, une gaine 3 et un moyen d'association 5 de ladite gaine sur un support, ladite gaine comprenant un dispositif de blocage 6, disposé dans un logement 14 prévu dans ladite gaine, susceptible de coopérer, par une zone d'engagement 15, avec un cran 7 de ladite tige pour la bloquer en coulissement, ledit ensemble comprenant en outre un moyen d'absorption 8 d'énergie agencé pour, lors d'un blocage en coulissement de la tige exerçant un effort seuil vers le haut ou vers le bas, permettre un mouvement relatif entre ladite tige et ledit moyen d'association par déformation dudit moyen d'absorption contre un moyen de déformation. La déformation peut être réversible ou aller jusqu'à la ruine du moyen d'absorption.

Le mouvement relatif peut être réalisé notamment à partir d'un effort seuil correspondant à une énergie supérieure ou égale à 10 joules.

Dans la réalisation présentée, il est prévu que le dispositif de blocage 6 soit disposé en contrainte, par un moyen de rappel élastique 18 comprimé, ici sous forme de ressort, contre la tige 2, de sorte à garantir une bonne coopération entre le cran 7 et ledit dispositif

Selon la réalisation de la figure 1, le moyen d'association 5 comprend un orifice 9 dans lequel est inséré la gaine 3, le moyen d'absorption 8 comprenant au moins une excroissance 10 radiale issue de la surface externe de ladite gaine, la section externe de ladite gaine au niveau de ladite excroissance étant supérieure à la section dudit orifice, le moyen de déformation étant formé par la périphérie dudit orifice.

L'excroissance 10 est ici sous forme de nervure 11 s'étendant axialement.

On décrit ici un siège de véhicule automobile comprenant un dossier, un appui-tête, au moins un ensemble 1 et un support formé de l'armature dudit dossier - respectivement dudit appui-tête -, ledit appui-tête - respectivement ledit dossier - comprenant au moins une tige 2 dudit ensemble, le moyen d'association 5 étant intégré à ladite armature.

Selon la réalisation représentée, le moyen d'absorption 8 est destiné à se déformer ou se ruiner, sous l'effet d'un effort seuil exercé vers le bas, c'est à dire lorsque la tête du passager percute l'appui-tête.

En variantes non représentées, il peut être prévu de disposer le moyen d'absorption 8 de sorte qu'il se ruine sous l'effet d'un effort seuil exercé vers le haut, c'est à dire lors d'un mouvement de projection de l'appui-tête hors de la gaine 3, vers l'habitacle du véhicule.

## Revendications

1. Ensemble (1) de réception en coulissement d'une tige (2) crantée de montage d'un appui-tête de siège de véhicule automobile, ledit ensemble comprenant ladite tige, une gaine (3) et un moyen d'association (5) de ladite gaine sur un support, ladite gaine comprenant un dispositif de blocage (6), disposé dans un logement (14) prévu dans ladite gaine, susceptible de coopérer, par une zone d'engagement (15), avec un cran (7) de ladite tige pour la bloquer en coulissement, ledit ensemble comprenant en outre un moyen d'absorption (8) d'énergie agencé pour, lors d'un blocage en coulissement de la tige exerçant un effort seuil vers le haut ou vers le bas, permettre un mouvement relatif entre ladite tige et ledit moyen d'association par déformation dudit moyen d'absorption contre un moyen de déformation,
**caractérisé en ce que** le moyen d'association (5) comprend un orifice (9) dans lequel est inséré la gaine (3), le moyen d'absorption (8) comprenant au moins une excroissance (10) radiale issue de la surface externe de ladite gaine, la section externe de ladite gaine au niveau de ladite excroissance étant supérieure à la section dudit orifice, le moyen de déformation étant formé par la périphérie dudit orifice.

2. Siège de véhicule automobile comprenant un dossier, un appui-tête, au moins un ensemble selon la revendication 1 et un support formé de l'armature dudit dossier - respectivement dudit appui-tête -, ledit appui-tête - respectivement ledit dossier - comprenant au moins une tige (2) dudit ensemble, le moyen d'association (5) étant intégré à ladite armature.

## Patentansprüche

1. Baugruppe (1) zur gleitenden Aufnahme einer Zahnstange (2) zur Montage einer Kopfstütze eines Kraftfahrzeugsitzes, wobei die besagte Baugruppe die besagte Stange, eine Hülle (3) und eine Vorrichtung zur Verbindung (5) der besagten Hülle auf einer Halterung umfasst, und die besagte Hülle eine Feststelleinrichtung (6) enthält, die in einer Aufnahme (14) angeordnet ist, die in der besagten Hülle vorgesehen ist, und die sich dazu eignet, durch einen Eingriffsbereich (15) mit einer Raste (7) der besagten Stange zusammenzuwirken, um die Gleitbewegung zu blockieren, und die besagte Baugruppe darüber hinaus eine Vorrichtung zur Aufnahme von Energie (8) umfasst, die angeordnet ist, um bei einem Blockieren der Gleitbewegung der Stange, die eine grenzwertige Kraft nach oben oder nach unten ausübt, eine Bewegung zwischen der besagten Stange und der besagten Verbindungsvorrichtung durch die Verformung der besagten Absorptionsvorrichtung gegen eine Verformungsvorrichtung zu ermöglichen, **dadurch gekennzeichnet, dass** die Verbindungsvorrichtung (5) eine Öffnung (9) enthält, in die die Hülle (3) eingeführt wird, und die Absorptionsvorrichtung (8) zumindest einen radialen Vorsprung (10) umfasst, der an der Außenfläche der Hülle übersteht, und der externe Querschnitt der besagten Hülle im Bereich des besagten Vorsprungs größer ist, als der Querschnitt der besagten Öffnung, und die Verformungsvorrichtung durch den Rand der besagten Öffnung gebildet wird.

2. Kraftfahrzeugsitz mit einer Rückenlehne, einer Kopfstütze, zumindest einer Baugruppe nach Anspruch 1, und einer Halterung, die aus dem Gestell der besagten Rückenlehne - bzw. der besagten Kopfstütze - gebildet wird, wobei die besagte Kopfstütze - bzw. die besagte Rückenlehne - zumindest eine Stange (2) der besagten Baugruppe umfasst, und die Verbindungsvorrichtung (5) in das besagte Gestell integriert ist.

## Claims

1. Unit (1) for receiving a toothed rod (2) for mounting a headrest for motor vehicle seat, said unit comprising said rod, a sheath (3) and a means for associating (5) said sheath onto a support, said sheath comprising a device for blocking (6), arranged in a housing (14) provided in said sheath, able to cooperate, via an engagement zone (15), with a catch (7) of said rod in order to block it in sliding, said unit further comprising a means for absorbing (8) energy arranged to, during a blocking in sliding of the rod exerting a threshold force upwards or downwards, allow for a relative movement between said rod et said means of association via deformation of said means for absorbing against a means of deformation, **characterised in that** the means for associating (5) comprise an orifice (9) wherein the sheath (3) is inserted, with the means for absorbing (8) comprising at least one radial protuberance (10) coming from the external surface of said sheath, with the external section of said sheath on said protuberance being greater than the section of said orifice, with the means of deformation being formed by the periphery of said orifice.

2. Seat for motor vehicle comprising a seat back, a headrest, at least one unit according to claim 1 and a support formed from the armature of said seat back - respectively of said headrest -, with said headrest - respectively said seat back - comprising at least one rod (2) of said unit, with the means of associating (5) being integrated into said armature.
